# EUROPEAN PATENT APPLICATION

(11) **EP 2 741 206 A1**
(43) Date of publication of application: **11.06.2014**
(21) Application number: 13275034.0
(22) Date of filing: 15.02.2013
(51) Int. Cl.: G06F 3/147, G06F 1/32

(54) **Electronic shelf label, electronic shelf labeling system and display driving apparatus**

(30) Priority: 10.12.2012 KR 20120143045
(71) Applicant: Samsung Electro-Mechanics Co., Ltd, Suwon, Gyunggi-Do (KR)
(72) Inventor: Woo, Seok Min, Gyunggi-do (KR); Byun, Gi Young, Gyunggi-do (KR); Kim, Hyun Hak, Gyunggi-do (KR)
(74) Representative: Potter Clarkson LLP

(57) **Abstract**

There is provided an electronic shelf label including: a power supply unit supplying power; a display unit outputting article information; a wireless communications unit receiving update information for updating the article information; a processor unit generating display information upon receiving the update information; and a display driving unit entering an idle mode when display information is received, and switching to an operation mode after the lapse of a pre-set standby time to drive the display unit to update the article information according to the display information.

## Description

### CROSS-REFERENCE TO RELATED APPLICATIONS

This application claims the priority of Korean Patent Application No. 10-2012-0143045 filed on December 10, 2012, in the Korean Intellectual Property Office, the disclosure of which is incorporated herein by reference.

### BACKGROUND OF THE INVENTION

### Field of the Invention

The present invention relates to an electronic shelf label capable of reducing power consumption and preventing malfunctions, an electronic shelf labeling system, and a display driving apparatus.

### Description of the Related Art

In general, an electronic shelf label (ESL) is an electronic display system replacing paper labels displaying information (e.g., the prices) of articles (or goods) on a display stand in a shop. The ESL may include a display device (an LCD, e-paper, or the like) as a means for visually displaying information relating to articles and a communications unit receiving and processing data having updated information relating to an article for sale.

Numerous types of articles may be displayed in a shop in a variety of locations, so it may be impossible to connect all electronic labels to a normal external power source on a practical level. Thus, electronic labels may be provided with power by a coin battery, or the like.

A main concern in an electronic shelf labeling system is stably displaying article information. In configuring an electronic shelf label in actuality, a size of the exterior thereof, manufacturing costs thereof, a position of a communications unit such as an antenna, and the like, are important hardware factors to be considered. As for a size of the exterior of an electric shelf label, an electronic shelf label is required to have a size and a volume sufficient for a customer in a shop to recognize display information viewable by intuition, while not obscuring a pertinent article. Also, manufacturing costs of an electronic shelf label are required to be low and disturbance to a communications unit should be minimized.

Due to the restriction conditions and requirements, a majority of electronic shelf labels employ a small battery not having a high service rating. A small battery has a limited rating due to limitations in terms of a physical volume and a chemical material thereof.

Also, a battery makes self-discharge during a certain period of time and may be affected by a usage temperature environment. Also, when a battery supplies required energy, an instantaneous voltage drop occurs due to a limitation in a battery rating. The various factors acting in a complex manner greatly affect a lifespan of a battery. As well, there are considerable deviations with respect to a lifespan of available energy according to an initial state of a battery, how many times a battery is operated and how it is operated, usage conditions thereof, and the like.

Thus, a technique capable of reducing energy consumption of a large number of electronic shelf labels introduced and installed in an electronic shelf labeling system and preventing malfunctions of electronic shelf labels due to a voltage drop of a battery is required.

Patent document 1 below relates to an electronic shelf labeling system having a wake-up function, devised to effectively operate a plurality of electronic labels present in a shop in a wake-up manner. Patent document 1 discloses a technique of grouping electronic shelf labels and operating them in a wake-up manner, but without disclosing a technique of operating each component of an electronic shelf label differently in a standby/operation mode according to a signal or a data transmission.

### [Related art document]

(Patent document 1) Korean Patent Laid Open Publication No. 10-2010-0048205

### SUMMARY OF THE INVENTION

An aspect of the present invention provides an electronic shelf label in which a standby/operation mode of each component is operated differently according to a signal or data transmission, and an electronic shelf labeling system including the same.

According to an aspect of the present invention, there is provided an electronic shelf label including: a power supply unit supplying power; a display unit outputting article information; a wireless communications unit receiving update information for updating the article information; a processor unit generating display information upon receiving the update information; and a display driving unit entering an idle mode when display information is received, and switching to an operation mode after the lapse of a pre-set standby time to drive the display unit to update the article information according to the display information.

A voltage of the power supply unit may be recovered to fall within a normal range after the standby time has lapsed.

The processor unit may set a standby time according to an amount of update information, and provide the same to the display driving unit.

When the wireless communications unit receives the update information, the processor unit may control the wireless communications unit to enter an idle mode.

After providing the display information to the display driving unit, the processor unit may enter an idle mode.

After driving the display unit to update the article information according to the display information, the display driving unit may enter the idle mode.

When the wireless communication receives the update information, the wireless communications unit, the processor unit, and the display driving unit may be converted from the idle mode to the operation mode.

According to another aspect of the present invention, there is provided an electronic shelf labeling system including: a plurality of electronic shelf labels respectively including a power supply unit supplying power, a display unit outputting article information, a wireless communications unit receiving update information for updating the article information, a processor unit generating display information upon receiving the update information, and a display driving unit entering an idle mode when display information is received, and switching to an operation mode after the lapse of a pre-set standby time to drive the display unit to update the article information according to the display information; a communications device wirelessly communicating with at least one of the plurality of electronic shelf labels to transfer the update information; and a management server generating the update information and providing the same to the communications device.

A voltage of the power supply unit may be recovered to fall within a normal range after the standby time has lapsed.

The processor unit may set a standby time according to an amount of update information, and provide the same to the display driving unit.

Also, when the wireless communications unit receives the update information, the processor unit may control the wireless communications unit to enter an idle mode.

After providing the display information to the display driving unit, the processor unit may enter an idle mode.

After driving the display unit to update the article information according to the display information, the display driving unit may enter the idle mode.

When the wireless communication receives the update information, the wireless communications unit, the processor unit, and the display driving unit may be converted from the idle mode to the operation mode.

According to another aspect of the present invention, there is provided a display driving apparatus including: a power supply unit supplying power; a display unit outputting first information; a wireless communications unit receiving update information for updating the first information; a processor unit generating second information upon receiving the update information; and a display driving unit entering an idle mode when the second information is received, and switching to an operation mode after the lapse of a pre-set standby time to drive the display unit to update the first information according to the second information.

A voltage of the power supply unit may be recovered to fall within a normal range after the standby time has lapsed.

The processor unit may set a standby time according to an amount of update information, and provide the same to the display driving unit.

Also, when the wireless communications unit receives the update information, the processor unit may control the wireless communications unit to enter an idle mode.

After providing the second information to the display driving unit, the processor unit may enter an idle mode.

After driving the display unit to update the second information according to the display information, the display driving unit may enter the idle mode.

When the wireless communication receives the update information, the wireless communications unit, the processor unit, and the display driving unit may be converted from the idle mode to the operation mode.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is a block diagram of an electronic shelf label according to an embodiment of the present invention;

FIG. 2 is a flow chart illustrating an operation of a display driving unit as a component of the electronic shelf label according to an embodiment of the present invention;

FIG. 3 is a graph showing changes in a current and a voltage over time in the electronic shelf label according to an embodiment of the present invention; and

FIG. 4 is a conceptual view of an electronic shelf labeling system according to an embodiment of the present invention.

### DETAILED DESCRIPTION OF THE PREFERRED EMBODIMENT

Embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity, and the same reference numerals will be used throughout to designate the same or like components.

As mentioned above, in general, an electronic shelf label employs a small coin battery having a service rating not high. However, in supplying power to each component of the electronic shelf label with the small coin battery having a service rating not high, in case that a large current is consumed for a long period of time beyond a limitation of the coin battery, a lifespan of the electronic shelf label, as well as that of the coin battery, is reduced. Also, in the case of consuming a large current for a long period of time, a voltage drop phenomenon occurs, causing malfunction of the electronic shelf label.

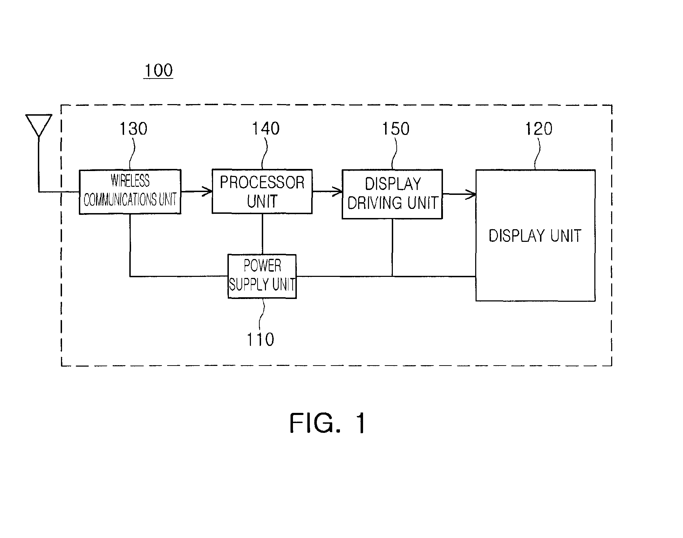

Hereinafter, an electronic shelf label and an electronic shelf labeling system according to an embodiment of the present invention will be described with reference to FIGS. 1 through 4.

FIG. 1 is a block diagram of an electronic shelf label 100 according to an embodiment of the present invention.

Referring to FIG. 1, the electronic shelf label 100 may include a power supply unit 110, a display unit 120, a wireless communications unit 130, a processor unit 140, and a display driving unit 150. The respective elements are classified based on the roles of major parts and actual hardware components may not necessarily be separated. According to the development of technologies, a plurality of components may be configured as a single integrated circuit. For example, the wireless communications unit 130 and the processor unit 140 may be incorporated in an integrated circuit.

Before the wireless communications unit 130 receives data including update information, or the like, or a signal, the electronic shelf label 100 may operate in an idle mode. The wireless communications unit 130 may be converted to an operation mode periodically in the idle mode to determine whether data including update information, or the like, or a signal has been received. Here, when data including update information, or the like, or a signal has been received, the electronic shelf label 100 may be converted to the operation mode to operate. Here, the display unit 120 displays article information constantly, so, in general, there is no discrimination between an idle mode and an operation mode. Thus, components operating differently in the idle mode and the operation mode may include the wireless communications unit 130, the processor unit 140, and the display driving unit 150.

The power supply unit 110 may supply power to the respective components, i.e., the display unit 120, the wireless communications unit 130, the processor unit 140, and the display driving unit 150 of the electronic shelf label 100. The power supply unit 110 may supply power to the respective elements of the electronic shelf label 100 in the form of a current.

The display unit 120 may output article information such as price information, stock information, production date, manufacturer, expiration date, and the like. In general, an electronic shelf labeling system may employ a plurality of electronic shelf labels 100, and a plurality of electronic shelf labels 100 are installed to correspond to a group of articles. Article information output from the display unit 120 relates to an article to which the electronic shelf label 100 is matched

The wireless communications unit 130 may receive update information for updating articles information through wireless communication, and transfer the received update information to the processor unit 140.

When the processor unit 140 receives the update information from the wireless communications unit 130, the processor unit 140 may control the wireless communications unit 130 to enter an idle mode. When the role of the wireless communications unit 130 of receiving data such as update information, or the like, and a signal from the outside wirelessly is terminated, the processor unit 140 may control the wireless communications unit 130 to enter an idle mode. By reducing a current consumed in the wireless communications unit 130, power consumption of the power unit 110 can be reduced and a voltage drop can be prevented to thus prevent malfunction of the electronic shelf label 100.

The processor unit 140 may process the received update information to generate display information. The generated display information may be delivered to the driving unit 150 so as to be used to update article information output to the display unit 120.

The display driving unit 150 may drive the display unit 120 to update article information according to the display information transferred from the processor unit 140.

When the processor unit 140 provides the display information to the display driving unit 150, it may enter an idle mode by itself, and when the display driving unit 150 receives the display information, the display driving unit 150 enters an idle mode, and thereafter, when a standby time has lapsed, the display driving unit 150 may be converted to an operation mode to drive the display unit 120 to update article information according to the display information. The display unit 120 may have a timer therein in order to be converted to the operation mode when the standby time has lapsed.

When the display information is transferred to the display driving unit 150 from the processor unit 140, the processor unit 140 may enter an idle mode to reduce power consumption, whereby power consumption of the power supply unit 110 is reduced and a voltage drop can be prevented.

Also, the display driving unit 150 may be maintained in the idle mode during a standby time, reducing power consumption of the power supply unit 110, and when the standby time has lapsed, a voltage, which has been dropped due to a current consumed while the wireless communications unit 130, the processor unit 140, and the display driving unit 150 operate, is recovered to fall within a service rating range, and thus, the display unit 120 may be driven without causing malfunctions. After driving the display unit 120 to update article information according to display information as the standby time has lapsed, the display driving unit 150 may enter the idle mode again.

Here, the standby time required for the voltage of the power supply unit 110 to be recovered to fall within the service rating range after the display unit 120 receives display information may be set at an initial stage when the electronic shelf label 100 is released to the market, or may be changed according to a user setting. However, the present invention is not limited thereto and the standby time may be set by the processor unit 140 according to an amount and size of update information. The standby time set by the processor unit 140 may be transferred to the display driving unit 150 together with the display information.

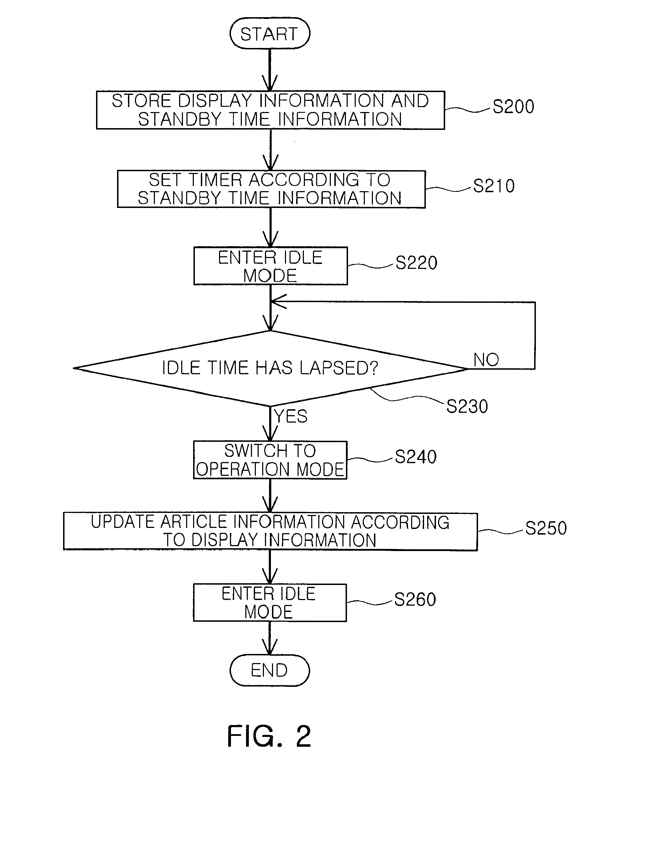

FIG. 2 is a flow chart illustrating an operation of the display driving unit as a component of the electronic shelf label according to an embodiment of the present invention. In FIG. 2, it is described that operations S200 to S260 are sequentially performed, but this is merely illustrative and a person skilled in the art may variously modify it by changing the order described in FIG. 2 or performing one or more operations among the operations S200 to S260 in parallel without departing from the characteristics thereof, so FIG. 2 is not limited to the time-series order.

An operation of the display driving unit 150 according to an embodiment of the present invention will be described in detail with reference to FIG. 2.

The display driving unit 150 may store display information generated by the processor unit 140 and information regarding a standby time set by the processor unit 140 (S200). However, as mentioned above, the standby time may be set by the processor unit 140, may be set when a product is launched onto the market, or may be changed according to a user setting.

The display driving unit 150 may set a timer provided therein according to the standby time information (S210). After setting the standby time in the timer, the display unit 120 enters an idle mode (S220), and whether the standby time has lapsed is determined (S230). When the standby time has not lapsed, the display driving unit continuously determines whether the standby time has lapsed. When the standby time has lapsed, the display driving unit 150 may be converted from the standby mode to the operation mode (S240).

After being converted to the operation mode, the display driving unit 150 may drive the display unit 120 to update article information according to the display information (S250). After driving the display unit 120, the display driving unit 150 may enter the standby mode again (S260).

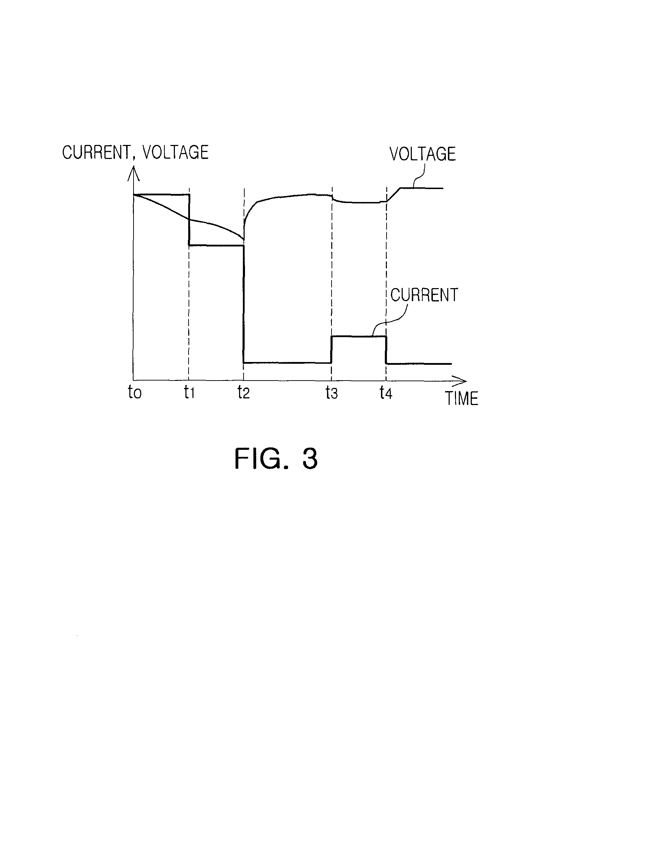

FIG. 3 is a graph showing changes in a current and a voltage over time in the electronic shelf label according to an embodiment of the present invention.

In FIG. 3, the current represents current consumed in each element of the electronic shelf label, and the voltage represents a change in a voltage of the power supply unit 110 according to current consumption.

As described above, the wireless communications unit 130, the processor unit 140, and the display driving unit 150 operate in an idle mode before receiving data including update information or a signal from the wireless communications unit 130, and when the data or a signal is received, the wireless communications unit 130, the processor unit 140, and the display driving unit 150 are converted to an operation mode.

When update information is received by the wireless communications unit 130 at a point in time t0, it can be seen that the wireless communications unit 130, the processor unit 140, and the display driving unit 150 are converted to an operation mode, so power consumption is increased, and thus, a voltage of the power supply unit 110 is dropped.

At a point in time t1, it can be seen that, as the wireless communications unit 130, which has transferred the update information to the processor unit 140, enters an idle mode, current consumption is reduced, and thus, a speed of voltage drop of the power supply unit 110 is slowed down.

At a point in time t2, display information is transferred between the processor unit 140 and the display driving unit 150, and the processor unit 140 is continuously maintained in the idle mode and the display driving unit 150 is maintained in the idle mode during a standby time (t1 to t3). It can be seen that, since the processor unit 140 and the display driving unit 150 have entered the idle mode, current consumption is reduced and a voltage is increased according to the reduced current consumption.

At a point in time t3, the standby time has lapsed, and the display driving unit 150 is converted into an operation mode and drives the display unit 120 to update article information according to the display information. It can be seen that since the display unit 120 is converted into an operation mode, current consumption is increased, and thus, the voltage is reduced.

At a point in time t4, it can be seen that the driving of the display unit 120 by the display driving unit 150 is completed and the display driving unit 150 enters an idle mode, so current consumption is reduced, and thus, the voltage is increased.

FIG. 1 may represent a display driving apparatus according to another embodiment of the present invention, as well as the electronic shelf label according to an embodiment of the present invention. A display driving apparatus according to an embodiment of the present invention may include the power supply unit 110, the display unit 120, the wireless communications unit 130, the processor unit 140, and the display driving unit 150.

In case that the configuration of FIG. 1 is applied to a display driving apparatus, rather than an electronic shelf label, the display driving apparatus may include the power supply unit 110 supplying power, the display unit 120 outputting first information, the wireless communications unit 130 receiving update information for updating the first information, the processor unit 140 generating second information upon receiving the update information, and the display driving unit 150 entering an idle mode when second information is received, and converting to an operation mode after the lapse of a pre-set standby time to drive the display unit to update the first information according to the second information.

Namely, it can be considered that the article information and the display information of the electronic shelf label correspond to the first information and the second information of the display driving apparatus, respectively. A specific operation of the display driving apparatus is the same as that of the foregoing electronic shelf label, so a detailed description thereof will be omitted.

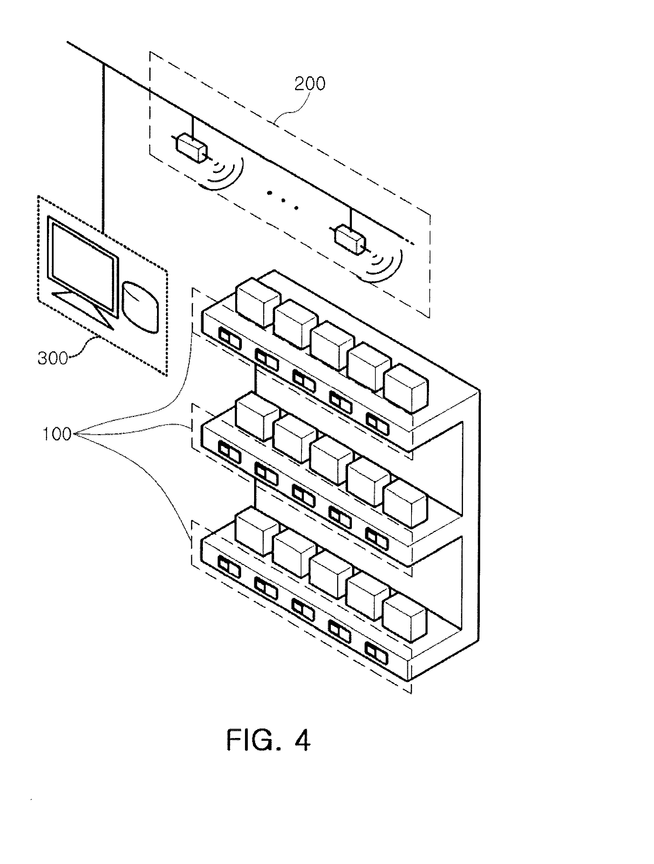

FIG. 4 is a conceptual view of an electronic shelf labeling system according to an embodiment of the present invention. The electronic shelf labeling system according to an embodiment of the present invention may include a plurality of electronic shelf labels 100, a communications device 200, and a management server 300.

Each of the plurality of electronic shelf labels 100 has the same function as the electronic shelf label 100 of FIG. 1, so a detailed description thereof will be omitted.

The communications device 200 wirelessly communicates with at least one of the plurality of electronic shelf labels 100 and communicates with the management server 300 through a fixed line or wirelessly to relay the plurality of electronic shelf labels 100 and the management server 300. Namely, the plurality of electronic shelf labels 100 and the management server 300 may transmit and receive data and signals through the communications device 200.

The management server 300 may have a database to store article information corresponding to each of the plurality of electronic shelf labels 100 and information regarding a general management. The management server 300 may generate update information according to article information and information regarding general management and provide the generated update information to the communications device 200.

As set forth above, according to embodiments of the invention, an idle mode and an operation mode of the respective elements of the electronic shelf label are operated differently according to a signal or data transmission, whereby power consumption can be reduced and malfunction can be prevented.

While the present invention has been shown and described in connection with the embodiments, it will be apparent to those skilled in the art that modifications and variations can be made without departing from the spirit and scope of the invention as defined by the appended claims.

## Claims

1. An electronic shelf label comprising:
a power supply unit supplying power;
a display unit outputting article information;
a wireless communications unit receiving update information for updating the article information;
a processor unit generating display information upon receiving the update information; and
a display driving unit entering an idle mode when display information is received, and switching to an operation mode after the lapse of a pre-set standby time to drive the display unit to update the article information according to the display information.

2. The electronic shelf label of claim 1, wherein a voltage of the power supply unit is recovered to fall within a normal range after the standby time has lapsed.

3. The electronic shelf label of claim 1, wherein the processor unit sets a standby time according to an amount of update information, and provides the same to the display driving unit.

4. The electronic shelf label of claim 1, wherein when the wireless communications unit receives the update information, the processor unit controls the wireless communications unit to enter an idle mode.

5. The electronic shelf label of claim 1, wherein after providing the display information to the display driving unit, the processor unit enters an idle mode.

6. The electronic shelf label of claim 1, wherein after driving the display unit to update the article information according to the display information, the display driving unit enters the idle mode.

7. The electronic shelf label of claim 1, wherein when the wireless communication receives the update information, the wireless communications unit, the processor unit, and the display driving unit are converted from the idle mode to the operation mode.

8. An electronic shelf labeling system comprising:
a plurality of electronic shelf labels according to any one of claims 1 to 7;
a communications device wirelessly communicating with at least one of the plurality of electronic shelf labels to transfer update information; and
a management server generating the update information and providing the same to the communications device.

9. A display driving apparatus comprising:
a power supply unit supplying power;
a display unit outputting first information;
a wireless communications unit receiving update information for updating the first information;
a processor unit generating second information upon receiving the update information; and
a display driving unit entering an idle mode when the second information is received, and switching to an operation mode after the lapse of a pre-set standby time to drive the display unit to update the first information according to the second information.

10. The display driving apparatus of claim 9, wherein a voltage of the power supply unit is recovered to fall within a normal range after the standby time has lapsed.

11. The display driving apparatus of claim 9, wherein the processor unit sets a standby time according to an amount of update information, and provides the same to the display driving unit.

12. The display driving apparatus of claim 9, wherein when the wireless communications unit receives the update information, the processor unit controls the wireless communications unit to enter an idle mode.

13. The display driving apparatus of claim 9, wherein after providing the second information to the display driving unit, the processor unit enters an idle mode.

14. The display driving apparatus of claim 9, wherein after driving the display unit to update the second information according to the display information, the display driving unit enters the idle mode.

15. The display driving apparatus of claim 9, wherein when the wireless communication receives the update information, the wireless communications unit, the processor unit, and the display driving unit are converted from the idle mode to the operation mode.

## Amended claims

### Amended claims in accordance with Rule 137(2) EPC.

**1.** An electronic shelf label comprising:
a power supply unit supplying power;
a display unit outputting article information;
a wireless communications unit receiving update information for updating the article information;
a processor unit generating display information upon receiving the update information; and
a display driving unit entering an idle mode when display information is received, and switching to an operation mode after the lapse of a pre-set standby time to drive the display unit to update the article information according to the display information.

**2.** The electronic shelf label of claim 1, wherein a voltage of the power supply unit is recovered to fall within a normal range after the standby time has lapsed.

**3.** The electronic shelf label of claim 1, wherein the processor unit sets a standby time according to an amount of update information, and provides the same to the display driving unit.

**4.** The electronic shelf label of claim 1, wherein when the wireless communications unit receives the update information, the processor unit controls the wireless communications unit to enter an idle node.

**5.** The electronic shelf label of claim 1, wherein after providing the display information to the display driving unit, the processor unit enters an idle mode.

**6.** The electronic shelf label of claim 1, wherein after driving the display unit to update the article information according to the display information, the display driving unit enters the idle mode.

**7.** The electronic shelf label of claim 1, wherein when the wireless communication receives the update information, the wireless communications unit, the processor unit, and the display driving unit are converted from the idle mode to the operation mode.

**8.** An electronic shelf labeling system comprising:
a plurality of electronic shelf labels according to any one of claims 1 to 7;
a communications device wirelessly communicating with at least one of the plurality of electronic shelf labels to transfer update information; and
a management server generating the update information and providing the same to the communications device.
